# EUROPÄISCHE PATENTSCHRIFT

(11) **EP 1 020 514 B1**
(45) Veröffentlichungstag und Bekanntmachung des Hinweises auf die Patenterteilung: **17.03.2004**
(21) Anmeldenummer: 99124439.3
(22) Anmeldetag: 08.12.1999
(51) Int. Cl.: C12G 1/00, A23L 2/04, C12G 1/02

(54) **Verfahren zur Weinveredelung durch Kaltvermahlen und Kaltpressen von Weintrauben und anderen Früchten**
Procedure for refining the wine taste by cold grinding and cold pressing of grapes and other fruits
Procédé de raffinement du goût de vin par broyage et pressage à froid de raisins et autres fruits

(30) Priorität: 16.01.1999 DE 19901551
(43) Veröffentlichungstag der Anmeldung: 19.07.2000
(73) Patentinhaber: Nawrath, Ingo, 74722 Buchen (DE)
(72) Erfinder: Tallafus, Ottmar, 74722 Buchen (DE); Nawrath, Ingo, 74722 Buchen (DE)
(74) Vertreter: Dimmerling, Heinz, Dipl.-Ing.

(56) Entgegenhaltungen:
- EP-A- 0 228 970
- FR-A- 2 230 301
- FR-A- 2 712 464
- US-A- 2 583 697
- DATABASE FSTA [Online] INTERNATIONAL FOOD INFORMATION SERVICE (IFIS), FRANFURT/MAIN, DE; FAN-YUNG A F ET AL: "Canned rowanberry juice." Database accession no. 80-1-04-h0518 XP002163868 & IZVESTIYA VYSSHIKH UCHEBNYKH ZAVEDENII, PISHCHEVAYA TEKHNOLOGIYA 1979 ODESSKII TEKH. INST. PISHCHEVOI PROMYSHLENNOSTI IM. M. V. LOMONOSOVA, ODESSA, USSR,

## Beschreibung

Die Erfindung betrifft ein Verfahren nach dem Oberbegriff des Anspruchs 1 zur Steigerung des natürlichen Fruchtzuckergehalts von Fruchtsäften und zur vollen Entfaltung der Weinaromen, bei welchem die Früchte zunächst auf eine Temperatur von wenigstens minus 15 Grad Celsius gekühlt und im gekühlten Zustand gepreßt werden.

Ein derartiges Verfahren ist beispielsweise aus der EP 0 228 970 A1 bekannt. Bei dem bekannten Verfahren werden tiefgefrorene Beeren oder Früchte bei einer Temperatur von minus 6 Grad Celsius bis minus 15 Grad Celsius gepreßt. Durch die Pressung bei niedriger Temperatur wird insbesondere bei Weintrauben Saft erhalten, dessen Zuckergehalt sehr hoch ist. Hierdurch kann aus dem Traubensaft Wein einer sehr hohen Qualitätsstufe erzeugt werden.

Ein anderes Verfahren ist aus FR 2 712 464 bekannt, wobei um -10°C oder weniger gefrorene Früchte gemahlt sind, und der Saft von der so erhaltenen Suspension getrennt wird.

Wenngleich mittels des bekannten Verfahrens auch der natürliche Fruchtzuckergehalt von Fruchtsäften gesteigert werden kann, so haftet ihm doch der Nachteil an, daß die Ausbeute noch nicht optimal ist.

Es ist Aufgabe der Erfindung, ein eingangs genanntes Verfahren derart auszubilden, daß die Saftausbeute bei hohem natürlichen Fruchtzuckergehalt und die Entfaltung der Weinaromen verbessert wird.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung werden die Früchte zunächst auf eine Temperatur von wenigstens minus 15 Grad Celsius gekühlt, danach zerkleinert und anschließend im gefrorenen Zustand gepreßt. Durch das Zerkleinern wird in vorteilhafter Weise erreicht, daß beim Pressen mehr Saft mit erhöhtem Fruchtzuckergehalt gewonnen werden kann, als wenn die Früchte nicht zerkleinert wären. Es hat sich gezeigt, daß durch das Zerkleinern die Menge des erhaltenen Saftes um etwa 30 bis 60 Prozent gesteigert werden kann.

Mittels des erfindungsgemäßen Verfahrens kann beispielsweise bei Trauben mit einem Mostgewicht von 75 Grad Öchsle der Öchslegehalt auf bis zu 140 Grad Öchsle gesteigert werden, ohne daß sogenannte überreife Trauben verwendet werden müssen. Beim erfindungsgemäßen Verfahren gehen keine wertvollen Weinaromastoffe durch Gefriersublimation verloren. Die natürlichen Aromastoffe kommen zur vollen Entfaltung.

Es hat sich gezeigt, daß die mittels des erfindungsgemäßen Verfahrens kaltgepreßten Traubenmoste wesentliche gehaltvollere Weinaromen geben, als dies bei den bekannten Verfahren der Fall ist. Mittels des erfindungsgemäßen Verfahrens können wahlweise einfache Tafelweine auf die Stufe von Kabinettweinen, Spätlesen und auch Beerenauslesen angehoben werden. Der dabei entstehende Saftverlust ist vemachlässigbar.

Besonders vorteilhaft ist es, wenn die Temperatur beim Zerkleinern unter minus 20 Grad Celsius liegt. Sehr gute Ergebnisse wurden bei einer Temperatur von minus 20 Grad Celsius bis minus 30 Grad Celsius erzielt.

Des weiteren ist es besonders vorteilhaft, wenn die Temperatur beim Pressen unter minus 5 Grad Celsius liegt. Je tiefer die Temperatur beim Pressen ist desto höher ist der Fruchtzuckergehalt des Saftes. Besonders gute Ergebnisse wurden dann erreicht, wenn die Temperatur bei Beginn des Pressens bei etwa bei minus 20 Grad Celsius liegt und beim Beenden des Preßvorgangs minus 6 Grad Celsius beträgt.

Als besonders vorteilhaft hat sich herausgestellt, die Früchte oder Weintrauben auf eine Korngröße mit einem Durchmesser von kleiner als 5 Millimeter zu zerkleinern. Besonders günstig ist es, wenn die Früchte mittels einer Schneid- oder Prallmühle fein zerkleinert werden. Hierdurch kann ein kontrolliertes Aussaften erreicht werden. Wegen der nicht sehr hohen Anpreßdrücke bei Quetschmühlen, Walzenmühlen oder Kugelmühlen wird ein vorzeitiges, unkontrolliertes partielles Aussaften vermieden.

Sehr günstig ist es auch, wenn die Früchte mittels einer Kühl-Förderschnecke, welche ein kryogenes Kältemittel wie beispielsweise flüssigen Stickstoff, flüssiges Kohlendioxid, flüssigen Sauerstoff oder flüssiges Argon enthält, während der Zuführung zur Zerkleinerung auf die Zerkleinerungstemperatur gekühlt werden. Hierdurch werden die Früchte sehr schonend auf eine tiefe Temperatur gekühlt. Insbesondere bleiben bei dem erfindungsgemäßen Gefrierverfahren die Trauben ganz. Es entsteht kein Aufplatzen der Traubenschale. Des weiteren entstehen keine Zerstörungen der Traubenzellen durch die Bildung von sehr großen Eiskristallen, wie dies bei der Sublimationsgefriertechnik immer der Fall ist. Denn, wenn zum Beispiel konventionelle Tiefkühltruhen oder Kältemaschinen verwendet werden, welche zum Gefrieren der Trauben trockene, ungesättigte Kaltluft erzeugen, wird den Trauben bereits beim Gefriervorgang Wasser und Aromastoffe durch den Sublimationsvorgang entzogen.

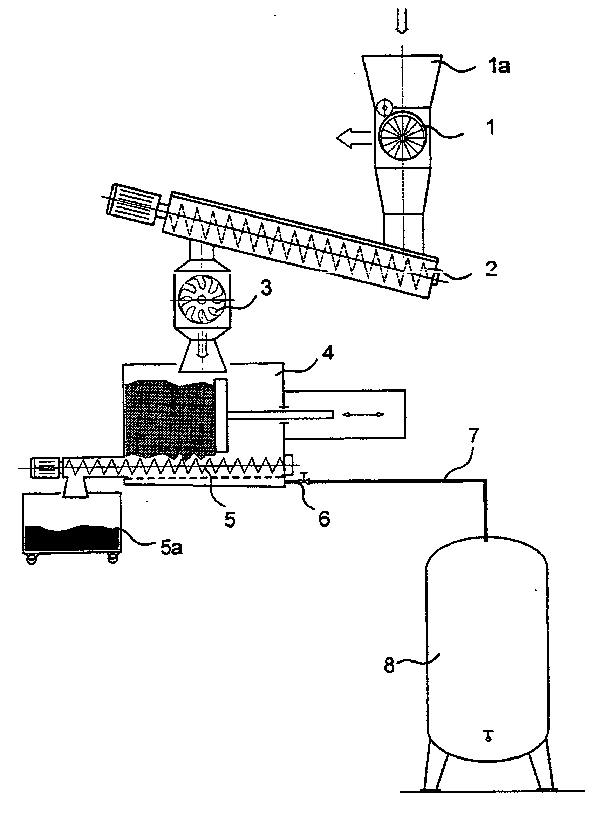

Weitere Merkmale der vorliegenden Erfindung ergeben sich aus der nachfolgenden Beschreibung eines besonderen Ausführungsbeispiels unter Bezugnahme auf die Zeichnung.

Es zeigt die einzige Figur eine Anordnung zur Durchführung des erfindungsgemäßen Verfahrens mit Weintrauben.

Wie der Figur entnommen werden kann, ist eine Abbeermaschine 1 vorhanden, welche oberhalb einer als Kühl-Förderschnecke ausgebildeten Schnellfrosteinrichtung 2 angeordnet ist. Am Ausgang der Schnellfrosteinrichtung 2 ist eine Schneidmühle 3 zum Kaltmahlen angeordnet. Der Ausgang der Schneidmühle 3 ist mit einer Presse 4 verbunden. Die Presse 4 kann als hydraulische oder pneumatische Kolbenpresse oder Schneckenpresse ausgebildet sein. Unterhalb der Presse 4 ist ein Schneckenförderer 5 angeordnet, sowie ein Anschluß 6 für die Saftentnahme vorgesehen. Am Anschluß 6 ist eine Leitung 7 angeschlossen, welche am anderen Ende mit einem Tank 8 verbunden ist.

Die Trauben werden in einen am oberen Ende der Abbeermaschine 1 angeordneten Einfülltrichter 1a geschüttet. In der Abbeermaschine 1 werden die Trauben von den sogenannten Rappen getrennt. Die Rappen werden über eine Rappenabfuhr 1b aus der Abbeermaschine 1 entfernt, wohingegen die Trauben in die Schnellfrosteinrichtung 2 gelangen. In der Schnellfrosteinrichtung 2 befindet sich ein kryogenes Kältemittel wie beispielsweise flüssiger Stickstoff. Die Schnellfrosteinrichtung 2 kann beispielsweise als Kühl-Förderschnecke ausgebildet sein, wie sie im europäischen Patent Nr. 0181 563 beschrieben ist.

Während die Trauben in der Kühl-Förderschnecke 2 zum Eingang der Schneidmühle 3 gefördert werden, werden die Trauben auf eine Temperatur von minus 30 Grad Celsius bis minus 35 Grad Celsius abgekühlt.

Zu Beginn der Zerkleinerung der Trauben befinden sich diese somit auf einer Temperatur von minus 30 Grad Celsius bis minus 35 Grad Celsius. Während der Zerkleinerung findet eine Erwärmung statt, so daß das nach der Zerkleinerung vorhandene Mahlgut oder auch Maische genannt eine Temperatur von minus 20 Grad Celsius bis minus 25 Grad Celsius hat.

Das Mahlgut gelangt in die Presse 4, mittels welcher Saft aus dem Mahlgut gepreßt wird. Während des Pressens erwärmt sich das Mahlgut. Je nach Anforderungen an die Qualität des erhaltenen Saftes wird solange gepreßt, bis das Mahlgut eine Temperatur von minus 6 bis 8 Grad Celsius erreicht hat. Bei Erreichen dieser Temperatur wird der Preßvorgang eingestellt und die sich noch in der Presse befindlichen Feststoffe, der sogenannte Trester, mittels der Förder-Schnecke 5 aus der Presse 4 in einen dafür vorgesehenen Behälter 5a gefördert

Der sich während des Pressens am Boden der Presse sammelnde Saft wird über den Anschluß 6 und die Leitung 7 dem Tank 8 zugeführt. Der Tank 8 kann als Gähr-Tank ausgebildet sein.

Mittels des erfindungsgemäßen Verfahrens kann das Mostgewicht von beispielsweise 70 Grad Öchsle auf 130 bis 200 Grad Öchsle gesteigert werden. Insbesondere entfalten sie bei dem erfindungsgemäßen Verfahren die Weinaromen vollständig.

## Patentansprüche

1. Verfahren zur Steigerung des natürlichen Fruchtzuckergehalts und zur vollen Entfaltung der natürlichen Aromastoffe von Fruchtsäften, bei welchem die Früchte zunächst auf eine Temperatur von wenigstens minus 15 Grad Celsius gekühlt und im gekühlten Zustand gepreßt werden,
**dadurch gekennzeichnet,**
**daß** die Früchte vor dem Pressen zerkleinert werden.

2. Verfahren nach Anspruch 1,
**dadurch gekennzeichnet,**
**daß** die Früchte vor dem Zerkleinern auf eine Temperatur unter minus 25 Grad Celsius gekühlt werden.

3. Verfahren nach Anspruch 1 oder 2,
**dadurch gekennzeichnet,**
**daß** die Temperatur beim Zerkleinern unter minus 20 Grad Celsius liegt.

4. Verfahren nach einem der Ansprüche 1 bis 3,
**dadurch gekennzeichnet,**
**daß** die Temperatur beim Pressen unter minus 5 Grad Celsius liegt.

5. Verfahren nach einem der Ansprüche 1 bis 4,
**dadurch gekennzeichnet,**
**daß** die Früchte auf eine Korngröße mit einem Durchmesser von kleiner als 5 mm zerkleinert werden.

6. Verfahren nach einem der Ansprüche 1 bis 5,
**dadurch gekennzeichnet,**
**daß** die Früchte mittels einer Schneid- oder Prallmühle zerkleinert werden.

7. Verfahren nach einem der Ansprüche 1 bis 6,
**dadurch gekennzeichnet,**
**daß** die Früchte mittels eines kryogenen Kältemittels auf die Zerkleinerungstemperatur gekühlt werden.

8. Verfahren nach Anspruch 7;
**dadurch gekennzeichnet,**
**daß** die Früchte mittels einer Kühl-Förderschnecke, welche das kryogene Kältemittel enthält, während der Zuführung zur Zerkleinerung gekühlt werden.

## Claims

1. Procedure for increasing the natural fruit sugar content and for fully developing the natural aromas of fruit juices, in which the fruits are first cooled to a temperature of at least minus 15 degrees Celsius and pressed in the cooled state, **characterized in that** the fruits are comminuted prior to pressing.

2. Procedure according to Claim 1, **characterized in that** the fruits are cooled to a temperature below minus 25 degrees Celsius prior to comminution.

3. Procedure according to Claim 1 or 2, **characterized in that** the temperature during the comminution is below minus 20 degrees Celsius.

4. Procedure according to any of Claims 1 or 3, **characterized in that** the temperature during the pressing is below minus 5 degrees Celsius.

5. Procedure according to any of Claims 1 to 4, **characterized in that** the fruits are comminuted to a particle size having a diameter of less than 5 mm.

6. Procedure according to any of Claims 1 to 5, **characterized in that** the fruits are comminuted by means of a cutting or impact mill.

7. Procedure according to any of Claims 1 to 6, **characterized in that** the fruits are cooled to the comminution temperature by means of a cryogenic refrigerant.

8. Procedure according to Claim 7, **characterized in that** the fruits are cooled by means of a cooling screw conveyor which contains the cryogenic refrigerant during feeding for comminution.

## Revendications

1. Procédé pour augmenter la teneur naturelle en fructose de jus de fruits et pour développer pleinement leurs arômes naturels, selon lequel les fruits sont d'abord refroidis à une température d'au moins -15° Celsius, et sont pressés à l'état refroidis, **caractérisé en ce que** les fruits sont broyés avant le pressage.

2. Procédé selon la revendication 1, **caractérisé en ce que** les fruits sont, avant le broyage, refroidis à une température inférieure à -25° Celsius.

3. Procédé selon la revendication 1 ou 2, **caractérisé en ce que** la température lors du broyage est inférieure à -20° Celsius.

4. Procédé selon l'une des revendications 1 à 3, **caractérisé en ce que** la température lors du pressage est inférieure à -5° Celsius.

5. Procédé selon l'une des revendications 1 à 4, **caractérisé en ce que** les fruits sont broyés à une grosseur de grain de diamètre inférieur à 5 mm.

6. Procédé selon l'une des revendications 1 à 5, **caractérisé en ce que** les fruits sont broyés au moyen d'un broyeur à couteaux ou à disques de percussion.

7. Procédé selon l'une des revendications 1 à 6, **caractérisé en ce que** les fruits sont refroidis à la température de broyage au moyen d'un réfrigérant cryogène.

8. Procédé selon la revendication 7, **caractérisé en ce que** les fruits sont, pendant leur apport au broyage, refroidis au moyen d'une vis transporteuse réfrigérante qui contient le réfrigérant cryogène.
